# EUROPÄISCHE PATENTANMELDUNG

(11) **EP 1 729 390 A2**
(43) Veröffentlichungstag der Anmeldung: **06.12.2006**
(21) Anmeldenummer: 06405147.7
(22) Anmeldetag: 06.04.2006
(51) Int. Cl.: H02G 15/00

(54) **Kompakte Kabeleinführung mit Zugentlastung und Schirmanbindung**

(30) Priorität: 03.06.2005 CH 9372005
(71) Anmelder: Jenny, Alois, 6037 Root (CH)
(72) Erfinder: Jenny, Alois, 6037 Root (CH)
(74) Vertreter: Schneider Feldmann AG Patent- und Markenanwälte

(57) **Zusammenfassung**

Die Erfindung betrifft eine Vorrichtung (1) zur zugsicheren Einführung eines oder mehrerer Kabel (9) in ein Gehäuse (8), mit der Möglichkeit der Anbindung eines Kabelschirms (7). Die Vorrichtung (1) weist ein Klemmelement (2) und ein Frontelement (5) mit einer Öffnung (12) auf. Das Kabel (9) ist durch die Öffnung (12) und zwischen dem Klemmelement (2) und dem Gehäuse (8) hindurchführbar und mit dem Klemmelement (2) am Gehäuse (8) fixierbar.

Zwischen dem Frontelement (5) und dem Klemmelement (2) ist ein O-Ring (4) konzentrisch zur Öffnung (12) angeordnet, wobei der O-Ring einen inneren Durchmesser aufweist, der im wesentlichen gleich gross wie der Durchmesser des Kabels (9) ist, und einen äusseren Durchmesser aufweist, der grösser ist als ein kleinster Durchmesser der Öffnung (12) des Frontelements (5). Das Kabel (9) ist durch den O-Ring (4) hindurchführbar, und der O-Ring (4) ist form- und/oder kraftschlüssig am Frontelement fixiert. Ein elektrisch leitendes Klemmelement (2) kann zusätzlich den Kabelschirm (7) unterklemmen.

## Beschreibung

Die Erfindung betrifft eine Vorrichtung zur zugsicheren Einführung eines oder mehrerer Kabel in einem Gehäuse, nach dem Oberbegriff des unabhängigen Anspruchs. In einer bevorzugten Ausführungsform ist ein Schirm des Kabels mit dem Gehäuse elektrisch leitend verbunden.

Wenn elektrische Verbindungen in ein Gehäuse geführt werden müssen, geschieht dies meist mittels flexibler Leiter, beispielsweise Litzen, von denen mehrere zu einem Kabel zusammengefasst sein können. Solche Kabel müssen zugsicher am Gehäuse befestigt sein, damit eine kabelaxiale Kraft diese nicht herausziehen und nicht auf die elektrischen Verbindungen der einzelnen Leiter im Gehäuse wirken kann. Diese kabelkoaxiale Kraft muss stattdessen vom Gehäuse aufgenommen werden. Bei Anforderungen an die elektromagnetische Verträglichkeit (EMV) sind die einzelnen Leiter im Kabel zudem mit einem metallischen Schirm ummantelt. Dieser Schirm muss grossflächig, elektrisch leitend mit dem Gehäuse verbunden werden.

Zur zugsicheren Einführung von Kabeln in Gehäusen gibt es verschiedene Möglichkeiten. Beispielsweise kann ein Kabel, welches durch eine Öffnung in ein Gehäuse geführt wird, im Inneren des Gehäuses mit einem Klemmelement form-und/oder kraftschlüssig mit dem Gehäuse verbunden werden. Damit wirkt eine Zugkraft via den Kabelmantel und die einzelnen Leiter auf das Klemmelement. Auf die einzelnen Leiter hinter dem Klemmelement wirkt keine Kraft.

Problematisch bei Kabelverbindungen dieser Art sind Verletzungen des Kabels an der Gehäuseöffnung, durch die das Kabel hindurchgeführt wird, beispielsweise durch scharfe Kanten. Dies kann zum Beispiel bei der Verlegung eines Kabels in einem engen Bogen gleich bei der Gehäuseöffnung geschehen. Solche Probleme werden verschärft durch Bewegungen des Kabels, beispielsweise bei beweglichen Teilen von Motoren, Aktuatoren, usw. Koaxialkabel und Kabel mit dünnen Leitern sind besonders empfindlich.
Als Schutz gegen solche Beschädigungen sind Verstärkungselemente in Gebrauch, die anschliessend an die Gehäuseöffnung auf der Aussenseite des Gehäuses angeordnet sind und das Kabel über eine gewisse Strecke versteifen. Eine Beschädigung des Kabels ist damit zwar vermieden, jedoch wird gleichzeitig eine platzsparende Verlegung des Kabels verunmöglicht.
Eine andere Methode zur zugssicheren Einführung in ein Gehäuse ist die Verbindung eines externen Kabels mit einer gehäuseinternen Verkabelung mittels einer zuggesicherten Steckverbindung. Solche Steckverbindungen können durch Verschrauben, Verklemmen oder mittels Bajonettverschluss form- und/oder kraftschlüssig verbunden werden. Beispiele hierfür sind Parallelport-Steckverbindungen aus der Computerindustrie (z.B. SCSI), die mit zwei Schrauben oder zwei verklemmbaren Federelementen zugsicher verbunden werden können, oder die noch robusteren Steckverbindungen mit Bajonettverschluss, die unter anderem bei Anwendungen zum Zuge kommen, bei denen die Steckverbindungen starken mechanischen Belastungen ausgesetzt sein können. Zugsichere Steckverbindungen für mehrere parallele Leiter haben den Nachteil, dass sie - verglichen mit dem eigentlichen Kabeldurchmesser - in der Regel sehr voluminös sind.
Moderne Bauteile, beispielsweise elektronische oder elektrische Baugruppen, Sensoren, Motoren, Aktuatoren, werden immer kleiner gebaut, was primär Platz spart, aber auch ganz neue Anwendungen ermöglicht. Ein nicht unerheblicher Teil eines durch eine kleinere Bauweise eingesparten Volumens jedoch wird durch voluminöse Steckverbindungen oder durch das Totvolumen um Kabelversteifungen wieder verbraucht.

Die Aufgabe der Erfindung ist es, eine Vorrichtung der eingangs erwähnten Art zur Verfügung zu stellen, welche es erlaubt, ein Kabel so am Gehäuse zu befestigen, dass es platzsparend verlegt werden kann, bei einem gleichzeitigem bestmöglichen Schutz des Kabels gegen mechanische Beschädigungen, insbesondere in abgewinkeltem Zustand. Vorteilhaft wird auch eine satte, EMVgerechte Schirmanbindung an das Gehäuse sicher gestellt.

Diese Aufgabe wird durch eine erfindungsgemässe Vorrichtung zur zugsicheren Einführung eines oder mehrerer Kabel in ein Gehäuse gelöst, gemäss dem unabhängigen Anspruch. Weitere bevorzugte Ausführungsformen sind in den abhängigen Ansprüchen gegeben. Insbesondere ist vorteilhaft eine Kabelschirmanbindung gegeben.
Die erfindungsgemässe Vorrichtung verzichtet auf die Verwendung von Kabelversteifungselementen und voluminösen zuggesicherten Steckverbindungen ausserhalb des Gehäuses. Die zugssichere Befestigung des Kabels wird durch ein im Inneren des Gehäuses angeordnetes Klemmelement sichergestellt, mittels welchem das Kabel form- und/oder kraftschlüssig mit dem Gehäuse verbindbar ist. Gegen die Gehäuseaussenseite hin ist ein sogenannter O-Ring, also ein aus einem elastomeren Polymer bestehender Ring mit in der Regel rundem Querschnitt, bündig zu einem Frontelement mit einer Öffnung und konzentrisch zu dieser Öffnung angeordnet, durch die das Kabel verläuft. Der O-Ring ist form-und/oder kraftschlüssig am Frontelement fixiert. Da das Kabel auch bei abgewinkelter Anordnung immer auf dem O-Ring aufliegt, und die Gehäuseöffnung bzw. das Frontelement nicht berührt, ist es vor Beschädigung durch scharfe Kanten einer Gehäuseöffnung geschützt.

Im Folgenden wird die erfindungsgemässe Vorrichtung anhand von Zeichnungen erläutert.
Figuren 1(a), (b) und (c) zeigen ein mit einer erfindungsgemässen Vorrichtung ausgestattetes Gehäuse mit Kabel, mit drei Beispielen für eine mögliche Ausgestaltung eines Frontteils.
Figur 2 zeigt eine erfindungsgemässe Vorrichtung im Längsschnitt durch die Kabelachse, von der einem Klemmelement entgegengesetzten Seite des Kabels her gesehen.
Figur 3 zeigt die gleiche erfindungsgemässe Vorrichtung im Querschnitt durch das Klemmelement.
Figur 4 zeigt eine weitere Ausgestaltungsform der erfindungsgemässen Vorrichtung, mit zwei zuggesicherten Kabeln, im Längsschnitt durch die Kabelachse, von der einem Klemmelement entgegengesetzten Seite des Kabels her gesehen.
Figur 4a zeigt die gleiche erfindungsgemässe Vorrichtung wie Figur 2. Das Kabel verfügt über einen Schirm, welcher über den Kabelmantel zurückgeklappt ist.
Figuren 5(a)-(d) zeigen Detailansichten verschiedener Ausgestaltungsformen der erfindungsgemässen Vorrichtung, im Längsschnitt entlang der Normalen der O-Ring-Ebene.

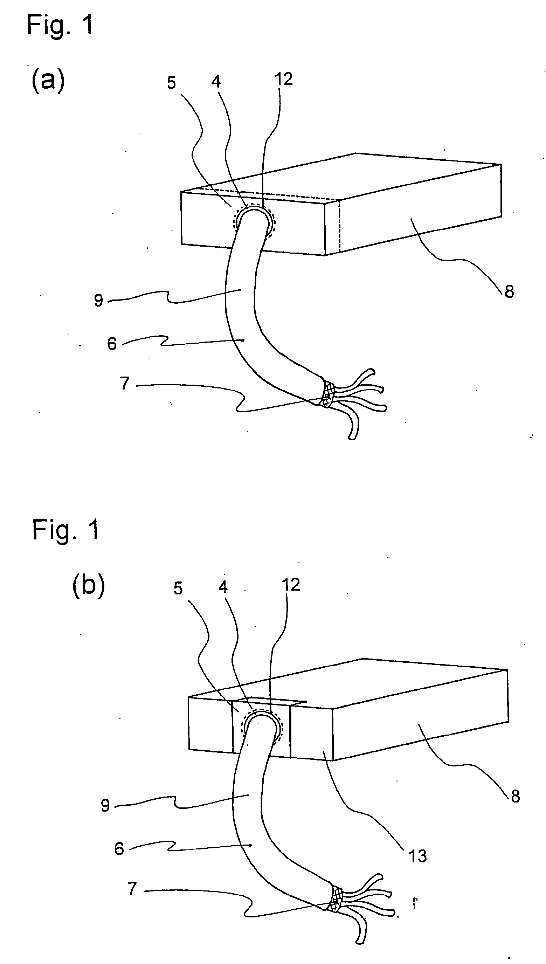

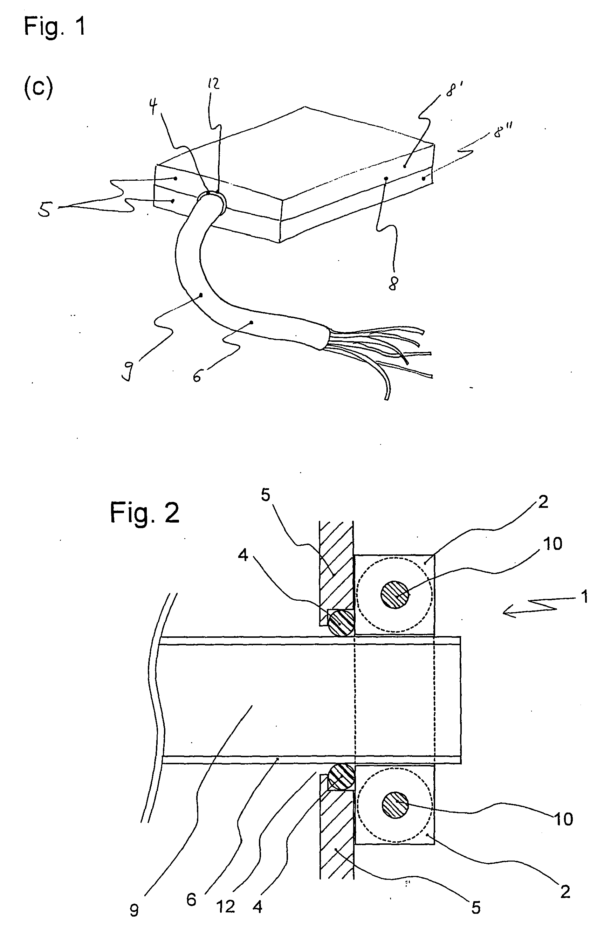

Figur 1(a) zeigt ein mit einer erfindungsgemässen Vorrichtung (nur ein Teil sichtbar) ausgestattetes Gehäuse 8, in welches mit Hilfe der erfindungsgemässen Vorrichtung ein Kabel 9 zugsicher eingeführt ist. Das gezeigte Kabel 9 besteht aus mehreren Litzen, einem metallischen Schirm 7, und einem äusseren Kabelmantel 9. Die erfindungsgemässe Vorrichtung eignet sich jedoch für jede Art von biegbarem Kabel mit einem im wesentlichen rundem Querschnitt. Auf der Seite des Kabelaustritts ist ein Frontelement 5 angebracht, mit einer Öffnung 12, deren Durchmesser grösser ist als der Kabelaussendurchmesser. In Figur 1 (a) ist nur ein innerer Teil des O-Rings zu sehen, die Lage des äusseren Durchmessers des O-Rings 4 ist als gestrichelte Linie um Öffnung 12 herum angedeutet.
Die Form der Öffnung 12 ist vorteilhaft wie gezeigt rund gestaltet, jedoch ist solch eine Formgebung nicht zwingend. Möglich sind auch andere Formen wie beispielsweise ovale, quadratische rechteckige oder sogar unregelmässige Formen, solange der kleinste Durchmesser der Öffnung 12 kleiner ist als der grösste Durchmesser des O-Rings 4, so dass eine Verschiebung des konzentrisch zur Öffnung 12 angeordneten O-Rings 4 entlang der Kabelachse nicht möglich ist.

Elementar ist eine räumliche Fixierung des O-Rings 4 am Frontelement 5, so dass dieser und das dadurch hindurch führende Kabel 9 nicht verrutschen kann.

In der in Figur 1(a) gezeigten Ausführungsform erstreckt sich das Frontelement 5 über die gesamte Breite des Gehäuses 8 und bildet dessen Wand. Eine alternative Ausgestaltung ist in Figur 1(b) gezeigt, in welcher das Frontelement 5 in die Gehäusewand 13 eingefügt ist. Die diesbezüglichen Möglichkeiten sind vielfältig. Insbesondere kann das Frontelement ein integraler Bestandteil des Gehäuses sein, indem es beispielsweise an das Gehäuse angeformt ist.
Es ist auch möglich, dass ein Gehäuse 8 wie in Figur 1(c) gezeigt aus zwei Teilen bestehend gefertigt ist. Die Öffnung 12 des Frontelements 5 wird durch zwei Einbuchtungen der beiden Gehäuseteile 8', 8" gebildet.

Die Funktionsweise und der Aufbau der erfindungsgemässen Vorrichtung wird in Figur 2 verdeutlicht. Figur 2 zeigt eine erfindungsgemässe Vorrichtung 1 im Längsschnitt durch die Achse eines zugsicher in das Gehäuse eingeführten Kabels 9, von der einem Klemmteil 2 entgegengesetzten Seite her gesehen. Der besseren Übersicht wegen ist das Innere des Kabels 9 leer dargestellt.
Die zugsichere Befestigung des Kabels 9 am Gehäuse wird durch ein Klemmelement 2 sichergestellt. Das Kabel 9 ist zwischen dem Klemmteil 2 und dem Gehäuse hindurch geführt und zwischen diesen form- und/oder kraftschlüssig fixiert.
Der Schutz des Kabels 9 vor Beschädigung wiederum wird durch die erfindungsgemässe Anordnung eines O-Rings 4 erreicht, der es erlaubt, das Kabel 9 direkt an der Gehäusewand zu biegen, ohne dass das Kabel 9 mit einer scharfen Kante in Berührung kommt.

In der gezeigten Ausgestaltung wird die Kraft zum Verklemmen des Kabels 9 durch zwei Halteelemente 10 erzeugt, die beidseits des Kabels 9 im Klemmelement 2 und im Gehäuse angeordnet sind. Mit den Halteelementen 10 lässt sich eine Kraft senkrecht zu Kabelachse und Gehäuse ausüben. Die einfachste Möglichkeit ist die Verwendung zweier Schrauben als Halteelemente 10, jedoch sind dem Fachmann auch andere Varianten von Klemmelementen bekannt.
Auf der dem Gehäuseinneren abgewandten Seite des Klemmelements 2 ist ein Frontelement 5 mit einer Öffnung 12 angeordnet, durch die das Kabel 9 ins Gehäuse geführt wird. Zwischen dem Frontelement 5 und dem Klemmelement 2 ist ein Ring aus einem elastomeren Polymer, ein sogenannter O-Ring 4, angeordnet, durch den das Kabel 9 geführt wird. O-Ringe sind in diversen Grössen im Handel erhältlich. Der äussere Durchmesser des O-Rings 4 ist grösser als der kleinste Durchmesser der Öffnung 12 des Frontelements, so dass der O-Ring 4 am Frontelement 5 konzentrisch zur Öffnung 12 fixiert ist. Der innere Durchmesser des O-Rings ist mit Vorteil gleich gross oder ein wenig kleiner als der Durchmesser des Kabels 9, damit der O-Ring 4 satt auf dem Kabel 9 sitzt.
In der gezeigten Ausführungsform verfügt das Frontelement 5 auf der dem Klemmelement 2 zugewandten Seite über eine konzentrische Aussparung, in welche der O-Ring 4 bündig passt. Der O-Ring 4 ist auch bündig zum Klemmelement 2 und konzentrisch zur Öffnung 12 angeordnet, und ist damit zwischen Frontelement 5 und Klemmelement 2 räumlich fixiert. Der Durchmesser der Öffnung 12 entspricht dem mittleren Durchmesser des O-Rings 4.

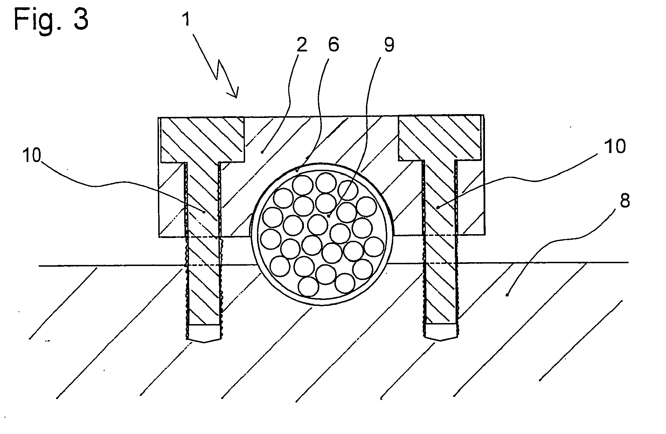

Figur 3 zeigt die gleiche erfindungsgemässe Vorrichtung 1 im Querschnitt durch das Klemmelement 2 senkrecht zur Kabelachse. In der gezeigten Ausgestaltungsform dienen zwei Schrauben als Halteelemente 10. Sie sind beidseits des Kabels 9 in zwei gewindelosen Bohrungen senkrecht zur Kabelachse im Klemmelement 2 angeordnet, das die Form eines Jochs aufweist. In der Wand des Gehäuses 8 sind zwei mit Gewinde versehene Bohrungen angeordnet, in welchen die Schrauben 10 angreifen. Durch Drehen der Schrauben wird eine Kraft auf das Kabel 9 ausgeübt, das zwischen dem Bogen des jochförmigen Klemmelements 2 und einer Vertiefung in der Gehäusewand liegt.

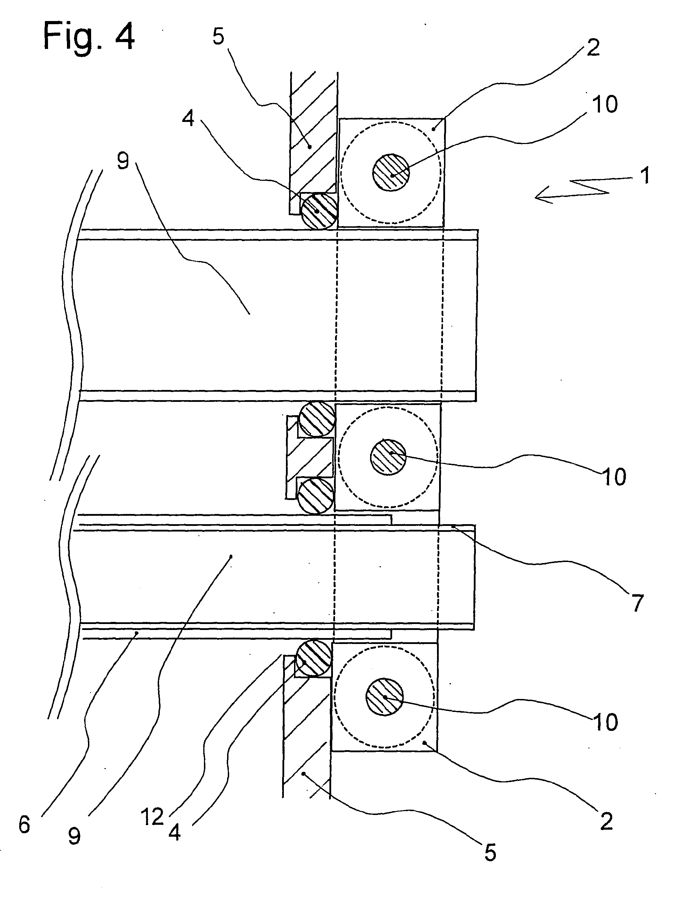

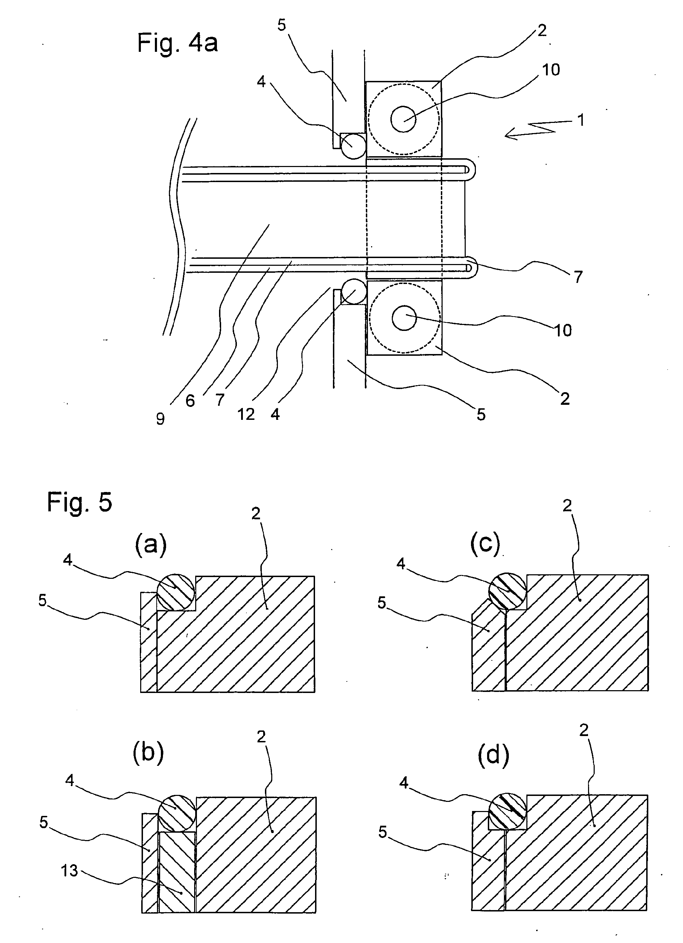

Figur 4 zeigt eine weitere Ausgestaltungsform der erfindungsgemässen Vorrichtung 1, mit zwei zuggesicherten Kabeln 9 mit verschiedenen Durchmessern. Die zwei Kabel 9 sind durch ein gemeinsames Klemmelement 2 am Gehäuse fixiert, das mit drei Halteelementen 10 mit dem Gehäuse 8 verbunden ist. Es können auch ein oder zwei Halteelemente 10 weggelassen sein. Das gemeinsame Frontelement 5 verfügt über zwei Öffnungen 12, durch die jeweils ein Kabel 9 geführt wird. Natürlich ist es ebenso möglich, zwei separate Frontelemente und/oder zwei separate Klemmelemente 2 zu verwenden.
Analog zur gezeigten Ausgestaltungsform sind auch erfindungsgemässe Vorrichtungen 1 realisierbar, mit welchen mehr als zwei Kabel mit gleichen oder unterschiedlichen Durchmessern zuggesichert mit dem Gehäuse verbunden werden können.
In Figur 4 verfügt ein Kabel 9 zusätzlich zum Kabelmantel 6 auch noch über einen Schirm 7 aus Metallgeflecht, der die Leitungen im Inneren des Kabels 9 gegen äussere Störsignale schützen soll. Für eine optimale Funktion einer solchen Abschirmung muss der Schirm 7 mit der Masse des Gehäuses elektrisch leitend verbunden sein. Dies kann durch Anlöten eines mit Masse verbundenen elektrischen Leiters an den Schirm geschehen, was jedoch EMV-mässig nicht optimal ist.

In einer bevorzugten Variante der erfindungsgemässen Vorrichtung 1 ist der Schirm 7 über das Klemmelement 2 elektrisch leitend mit dem Gehäuse verbunden.
Figur 4a zeigt eine erfindungsgemässe Vorrichtung 1 analog zur erfindungsgemässen Vorrichtung 1 in Figur 2. Eine flächige elektrisch leitende Verbindung zwischen dem Schirms 7 des Kabels und der Masse des Gehäuses wird erreicht durch Freilegen des Schirm 7 über eine Länge, die im wesentlichen der Breite des Klemmelements 2 in Richtung der Kabelachse entspricht, und durch anschliessendes Rückwärtsstülpen dieses Schirms 7 über den Kabelmantel 6. Die entsprechende Stelle des Kabels 9 mit dem rückwärtsgestülpten Schirm 7 wird zwischen dem Klemmelement 2 und dem Gehäuse fixiert, wodurch zwischen der Masse des metallischen Gehäuses und dem metallischen Schirm 7 eine grossflächige, EMV-günstige, elektrische Verbindung hergestellt ist. Vorteilhaft ist das Klemmelement 2 aus einem elektrisch leitenden Material gefertigt.

Eine andere Möglichkeit besteht darin, durch eine entsprechende Formgebung eines aus einem elektrisch leitenden Material gefertigten Klemmelements 2. Der Jochbogen des Klemmelements 2, wie er in Figur 3 gezeigt ist, muss im Bereich des freigelegten Schirms 7 über einen engeren Radius verfügen, damit ein gute elektrische Verbindung zwischen Klemmelement 2 und Schirm 7 sichergestellt ist, bei gleichzeitiger zugsicherer Befestigung auch des Kabelmantels 6.

Die Figuren 5(a)-(d) zeigen Detailansichten von verschiedenen Varianten für die mögliche Anordnung von Frontelement 5, O-Ring 4 und Klemmelement 2.
In Figur 5(a) verfügt das Klemmelement 2 über eine Vertiefung, in welcher der O-Ring 4 bündig anliegt. Figur 5(b) zeigt eine weitere Ausgestaltungsform, in welcher zwischen Frontelement 5 und Klemmelement 2 die Gehäusewand 13 angeordnet ist.
Figur 5(c) zeigt ein Frontelement mit abgeschrägten Kanten. Diese Ausführungsform hat den zusätzlichen Vorteil, dass ein Kabel noch mehr gebogen werden kann, ohne mit einer Kante in Berührung zu kommen.
Figur 5(d) zeigt eine Variante, in welcher einer Vertiefung gemeinsam vom Frontelement 5 und dem Klemmelement 2 gebildet wird.
Die Vertiefung kann auch eine andere Formgebungen aufweisen, z.B. gerundet. Bei den gezeigten Vertiefungen berührt der O-Ring 4 jeweils das Frontelement 5 oder das Klemmelement 2 an einer Fläche gegenüber dem Kabel 9. Dies ist jedoch nicht zwingend notwendig, da der O-Ring in den zwei Dimensionen senkrecht zur Kabelachse bereits durch das Kabel fixiert ist.

### Bezugzeichenliste:

- 1: Befestigungsvorrichtung
- 2: Klemmelement
- 4: O-Ring
- 5: Frontelement
- 6: Kabelmantel
- 7: Schirm
- 8: Gehäuse
- 8', 8": Gehäuseteil
- 9: Kabel
- 10: Halteelement
- 12: Öffnung des Frontelements
- 13: Gehäusewand

## Patentansprüche

1. Vorrichtung (1) zur zugsicheren Einführung eines Kabels (9) in ein Gehäuse (8), wobei
- die Vorrichtung ein Klemmelement (2) aufweist, das mit dem Gehäuse (8) form- und/oder kraftschlüssig verbindbar ist;
- das Kabel (9) zwischen dem Klemmelement (2) und dem Gehäuse (8) hindurchführbar und form- und/oder kraftschlüssig fixierbar ist; und
- auf einer Seite des Klemmelements (2), welche einer inneren Seite des Gehäuses (8) entgegengesetzt ist, ein Frontelement (5) mit einer Öffnung (12) angeordnet ist, durch welche das Kabel (9) hindurchführbar ist;
**dadurch gekennzeichnet, dass**
- zwischen dem Frontelement (5) und dem Klemmelement (2) ein aus einem elastischen Material gefertigter O-Ring (4) konzentrisch zur Öffnung (12) angeordnet ist,
wobei der O-Ring einen inneren Durchmesser aufweist, der im wesentlichen gleich gross wie ein Durchmesser des Kabels (9) ist, und
wobei der O-Ring einen äusseren Durchmesser aufweist, der grösser ist als ein kleinster Durchmesser der Öffnung (12) des Frontelements (5);
- das Kabel (9) durch den O-Ring (4) hindurchführbar ist; und
- der O-Ring (4) form- und/oder kraftschlüssig am Frontelement fixiert ist.

2. Vorrichtung nach Anspruch 1, **dadurch gekennzeichnet, dass**
ein Schirm (7) des Kabels (9) über das Klemmelement (2) mit einer Masse des Gehäuses (8) elektrisch leitend verbindbar ist.

3. Vorrichtung nach Anspruch 2, **dadurch gekennzeichnet, dass**
der Schirm (7) des Kabels (9) über einen Kabelmantel (6) des Kabels (9) zurückgestülpt ist.

4. Vorrichtung nach einem der Ansprüche 1 bis 3, **dadurch gekennzeichnet, dass**
das Frontelement (5) ein Teil des Gehäuses (8) ist.

5. Vorrichtung nach einem der Ansprüche 1 bis 4, **dadurch gekennzeichnet, dass**
mit der Vorrichtung (1) mehr als ein Kabel (9) zugsicher in das Gehäuse (8) einführbar ist.

6. Vorrichtung nach einem der Ansprüche 1 bis 5, **dadurch gekennzeichnet, dass**
das Frontelement (5) bündig zum Klemmelement (2) angeordnet ist.

7. Vorrichtung nach einem der Ansprüche 1 bis 5, **dadurch gekennzeichnet, dass**
bündig zwischen dem Frontelement (5) und dem Klemmelement (2) eine Gehäusewand (13) angeordnet ist.

8. Vorrichtung nach einem der Ansprüche 1 bis 7, **dadurch gekennzeichnet, dass**
die Öffnung (12) des Frontelements (5) kreisförmig ist und konzentrisch zum O-Ring (4) angeordnet ist.
